Europäisches Patentamt

European Patent Office

Office européen des brevets

(11) Veröffentlichungsnummer: **0 252 369 B1**

(19)

(12) **EUROPÄISCHE PATENTSCHRIFT**

(45) Veröffentlichungstag der Patentschrift: **13.05.92**

(21) Anmeldenummer: **87109066.8**

(22) Anmeldetag: **24.06.87**

(51) Int. Cl.⁵: **F16L  51/02**

(54) Metallischer Lateral- und/oder Angularkompensator für unter Druck stehende Rohrleitungen.

(30) Priorität: **05.07.86 DE 3622647**

(43) Veröffentlichungstag der Anmeldung:
**13.01.88 Patentblatt  88/02**

(45) Bekanntmachung des Hinweises auf die
Patenterteilung:
**13.05.92 Patentblatt  92/20**

(84) Benannte Vertragsstaaten:
**AT BE CH DE ES FR GB IT LI NL SE**

(56) Entgegenhaltungen:
DE-U- 7 805 710    DE-U- 7 933 066
DE-U- 8 618 001    GB-A- 1 260 143
US-A- 2 335 478    US-A- 3 976 312

(73) Patentinhaber: **Witzenmann GmbH
Metallschlauch-Fabrik Pforzheim
Östliche Karl-Friedrich-Strasse 134
W-7530 Pforzheim(DE)**

(72) Erfinder: **Berger, Peter, Dipl.-Ing.
Hohe Steige 9
W-7531 Pforzheim-Eutingen(DE)**
Erfinder: **Buchauer, Franz
Schauinsland 71
W-7530 Pforzheim(DE)**

(74) Vertreter: **Lemcke, Rupert, Dipl.-Ing. et al
Patentanwälte Dipl.-Ing. R. Lemcke Dr.-Ing.
H.J. Brommer Bismarckstrasse 16 Postfach
4026
W-7500 Karlsruhe 1(DE)**

## Beschreibung

Die Erfindung betrifft einen Lateral - und/oder Angularkompensator aus Metall von Rohrleitungen für unter Druck stehende Medien, bestehend aus zumindest einem Balg mit endständigen, radial vorstehenden Laschen, die durch beidseits des Balges verlaufende Zuganker relativ zueinander beweglich verbunden sind, wobei die Zuganker als einstückig durchgehende Metallstäbe ausgebildet sind, die mit ihren jeweils die Laschen durchquerenden Enden diesen gegenüber eine Gelenkstelle bilden, und wobei an wenigstens einer Gelenkstelle zwischen Zuganker und Lasche ein geräusch- und/oder schwingungsdämpfender Puffer angeordnet ist.

Derartige Kompensatoren sind in zahlreichen Ausführungsformen bekannt. Handelt es sich dabei um Lateralkompensatoren, so sind die Laschen meistens als Platten, teilweise auch direkt als Flansche ausgebildet, an denen die durchgehenden Zuganker gelenkig gelagert sind.

In zahlreichen Anwendungsfällen sind die zu kompensierenden Rohrleitungen an Pumpen oder andere vibrierende, geräuscherzeugende Maschinen angeschlossen. Diese Geräusche können sich durch die Rohrleitung relativ weit fortpflanzen und dadurch noch in erheblicher Entfernung von der Geräuschquelle störend bemerkbar machen.

Aus diesem Grunde wäre es wünschenswert, den zum Ausgleich von Wärmedehnungen eingesetzten Kompensator zugleich auch für die schwingungstechnische Entkopplung zwischen den angeschlossenen Leitungssträngen, insbesondere für die Isolierung des durch die Leitungen übertragenen Körperschalles heranzuziehen.

Zwar ließe sich durch Bälge und Zwischenglieder aus Gummi die Schallfortpflanzung durch den Kompensator reduzieren. Eine solche Konstruktion ist aber für höhere Temperaturen, etwa oberhalb 130° C nicht mehr geeignet. Außerdem sind Gummi- und Gummiersatzstoffe nicht alterungsbeständig, insbesondere dann, wenn sie wie hier einer kombinierten Belastung durch Druck und Temperatur ausgesetzt sind.

Kompensatoren der eingangsgenannten Art sind durch das DE-U-7 933 066 sowie die GB-A-1 260 143 bekannt. Dabei ist jedoch nur eine Ausbildung der Puffer als Gummipuffer ersichtlich. Derartige Puffer aus Gummi verbinden sich jedoch mit einer hohen Temperaturempfindlichkeit und Alterungsgefahr. Im übrigen stellen; sie auch keine optimale Lösung des Problems der Geräusch- und Schwingungsdämpfung dar, weshalb auch nach dem genannten Gebrauchsmuster als Ersatz für die Gummipuffer ein gänzlich anderer Weg zur Bewältigung der Geräusch- und Schwingungsprobleme eingeschlagen wird.

Hiervon ausgehend, liegt die Aufgabe der vorliegenden Erfindung darin, den eingangs beschriebenen Kompensator dahingehend zu verbessern, daß er bei hoher Temperatur-, Korrosions- und Alterungsbeständigkeit die Übertragung von Körperschall in starkem Maße isoliert. Dabei soll sein Kompensationsvermögen in vollem Umfang erhalten bleiben.

Diese Aufgabe wird erfindungsgemäß dadurch gelöst, daß der Puffer als ringförmiges Metalldrahtkissen aus gepreßtem Metalldrahtgewebe, -geflecht, -gestricke oder -vlies ausgebildet ist, und daß der Balg durch zumindest lokale Mehrlagigkeit gegen Körperschall isoliert ist.

Durch die Kombination dieser Maßnahmen erzielt man eine hohe schwingungstechnische Entkopplung zwischen den beiden Anschlußenden des Kompensators. Denn zum einen wird die Schwingungsübertragung über die Zuganker durch die zwischengeschalteten Metalldrahtkissen und zum anderen wird auch der andere Verbindungsweg über den Balg durch dessen spezielle Ausbildung gedämpft. Gleichzeitig ist der Kompensator für höchste Temperaturbelastungen geeignet, weil er in all seinen Teilen aus Metall oder Edelmetall besteht. Darüber hinaus ergibt sich dadurch eine wesentlich höhere Korrosions- und Alterungsbeständigkeit als bei den bisher für diesen Anwendungsfall eingesetzten Gummikompensatoren.

Die Gestrickekissen sind zweckmäßig so ausgeführt, daß sie eine progressive Kennlinie aufweisen. Damit können die aus dem Leitungsdruck resultierenden, einseitig auf die Zuganker wirkenden Kräfte bei geringen Abmessungen der Kissen und bei nur geringer Längenänderung des Kompensators aufgenommen werden. Zugleich wird durch diese Maßnahme auch die Schallisolierung begünstigt. Durch geeignete Wahl von Drahtdurchmesser und Packungsdichte bzw. Vorpressung können die Metalldrahtkissen optimal an die zu erwartenden Betriebsbedingungen angepaßt werden.

Das Metalldrahtkissen ist zweckmäßig radial unverschiebbar an der Lasche geführt. Diese Führung, die zur Vermeidung eines direkten Kontaktes zwischen den Zugankern und den Laschen notwendig ist, kann auf verschiedene Weise erfolgen, etwa indem das Metalldrahtkissen in einer Ausnehmung der Lasche geführt ist. Ebenso kann das Metalldrahtkissen einen axial vorstehenden Bund aufweisen, der in eine vom Zuganker mit Spiel durchquerte Öffnung der Lasche hineinragt und darin geführt ist.

Zur gleichmäßigen Kraftverteilung und zur Zentrierung des Metalldrahtkissens kann dieses ein- oder mehrseitig mit Stützscheiben versehen sein, wobei es sich empfiehlt, daß es teilweise in diese eingekammert ist. Dieses Einkammern hat den Vorteil, daß das Metalldrahtkissen auch bei sehr hohen Druckkräften seine Form behält.

Ebenso ist es möglich, daß das Metalldrahtkissen und/oder seine Stützscheibe an der der Lasche abgewandten Seite konisch oder konkav nach innen gezogen ist und mit einer entsprechend geformten Stirnfläche einer Querschnittserweiterung am Zugankerende korrespondiert. Damit ergibt sich ein quasi balliger Verlauf an den Berührflächen und die lateralen Ausgleichsbewegungen des Kompensators werden erleichtert. Die Querschnittserweiterung am Zugankerende wird im einfachsten Fall durch eine aufgeschraubte Mutter mit balliger Anlagefläche herbeigeführt.

Die Dämpfung des Balges selbst kann dadurch herbeigeführt werden, daß ein durchgehend mehrlagiger Balg verwendet wird, dessen innere Dämpfung zur Schallisolierung ausgenutzt wird. Vorteilhaft kann es auch sein, die Mehrlagigkeit nur lokal vorzusehen, indem ein Metallgewebe, -gestricke oder -geflecht vorgesehen wird, das über zumindest einen Teil des Balges übergezogen wird. Stattdessen ist es aber auch möglich, den Balg durch ein schraubengangförmig umlaufendes Metallband oder durch in Wellentäler eingelegte Ringe od. dgl. zu dämpfen.

Weitere Merkmale und Vorteile der Erfindung ergeben sich aus der nachfolgenden Beschreibung von Ausführungsbeispielen anhand der Zeichnung; dabei zeigt:

Fig. 1 einen Lateralkompensator mit einer im Schnitt dargestellten Gelenkstelle;

Fig. 2 bis 4 die gleiche Gelenkstelle in vergrößerter Darstellung in unterschiedlichen Varianten;

Fig. 5 die Federkennlinie des Metalldrahtkissens.

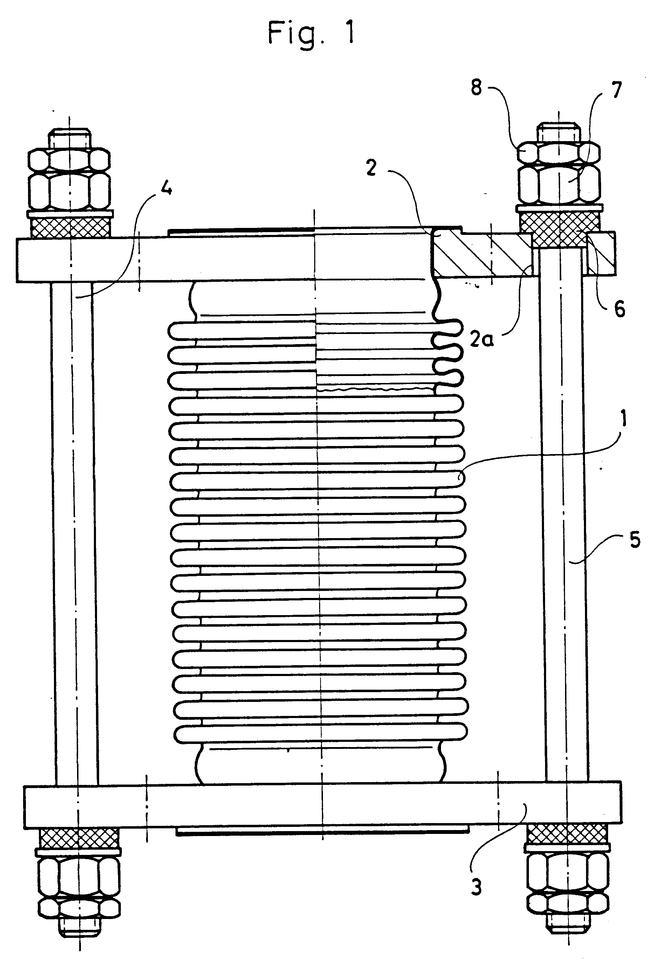

Der in Fig. 1 dargestellte Lateralkompensator besteht aus einem Metallbalg 1 mit endständigen Bördelflanschen 2 und 3, die gleichzeitig als Laschen zur Befestigung zweier beidseits des Balges laufender Zuganker 4 und 5 fungieren. Dazu weisen die Flansche jeweils an gegenüberliegenden Stellen zwei Durchgangsbohrungen 2a auf, deren Durchmesser größer als der Durchmesser der Zuganker ist.

Der Balg 1 ist - durch den dicken Strich im Schnittbereich dargestellt - zumindest zweiwandig ausgeführt oder stattdessen lokal mehrlagig und somit gegen Körperschall gedämpft.

Wesentlich ist nun, daß an den Gelenkstellen zwischen den Flanschen und den Zugankern jeweils ein konzentrisch zur Bohrung 2a positioniertes, ringförmiges Metalldrahtkissen 6 angeordnet ist, das den Zuganker umgibt und ihn allseits in Abstand zu dem jeweiligen Flansch hält.

Das Metalldrahtkissen 6 besteht aus vorgepreßtem, temperaturbeständigem, elastischem Edelstahldraht, zweckmäßig aus einem gepreßten Drahtgestricke. Es bewirkt die angestrebte schwingungstechnische Isolierung zwischen den Anschlußenden des Kompensators, denn durch seinen speziellen Aufbau kann sich Körperschall nicht oder nur unter sehr hoher Dämpfung durch die Getrickekissen fortpflanzen. Gleichzeitig führt diese vollmetallische Ausführung der Gelenkstellen zu einer hohen Temperatur-, Korrosions- und Alterungsbeständigkeit. Des weiteren lassen sich die Gestrickekissen zweckmäßig mit einer progressiven Federkennlinie herstellen. Dies erlaubt bei geringen Abmessungen und Federwegen die Aufnahme hoher Druckkräfte und zugleich wird die Schallisolierung nochmals begünstigt.

Im übrigen erfolgt die Festlegung der Flansche an den Zugankern in an sich bekannter Weise, also etwa durch eine Mutter 7, die auf das Ende des Zugankers aufgeschraubt und unter Zwischenlage einer Unterlegscheibe gegen die dem Flansch abgewandte Stirnseite des Gestrickekissens verspannt wird. Diese Mutter kann durch eine Kontermutter 8 gesichert werden.

Die gewünschte radiale Distanzierung des Zugankers 5 in der Bohrung 2a des Flansches geschieht im Ausführungsbeispiel nach Fig. 1 durch einen axial vorstehenden Bund des Gestrickekissens 6, der spielfrei ein Stück in die Bohrung 2a hineinläuft.

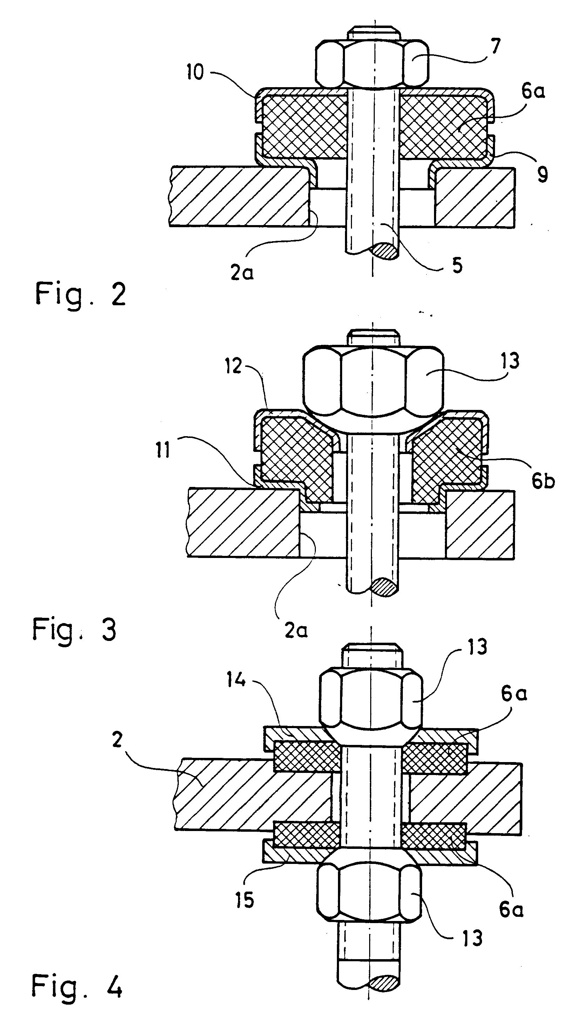

Demgegenüber weist das Gestrickekissen 6a im Ausführungsbeispiel nach Fig. 2 einen Rechteckquerschnitt auf und seine Führung in Radialrichtung erfolgt durch eine Stützscheibe 9, die an ihrem inneren Umfang einen spielfrei in die Bohrung 2a hineinlaufenden Bund, an ihrem äußerem Umfang einen spielfrei das Gestrickekissen 6a übergreifenden Bund aufweist. Da mit einer solchen Stützscheibe auch eine bessere Kraftverteilung gegeben ist und ein radiales Herausquetschen von Drahtmaterial aus dem Gestrickekissen erschwert wird, ist eine ähnliche Stützscheibe 10 auch an der Oberseite des Gestrickekissens 6a angeordnet. Sie ist an ihrem äußeren Umfang ein Stück um das Gestrickekissen herumgezogen, so daß dieses über den größten Teil seiner Umfangsfläche eingekammert ist. Selbstverständlich dürfen sich die Stützscheiben 9 und 10 im Betrieb nicht berühren.

Fig. 3 zeigt eine Bauform der Gelenkstelle, die sich vor allem für größere Lateralbewegungen des Kompensators eignet. In diesem Fall weist das Gestrickekissen 6b den gleichen Eingriff mit der Bohrung 2a auf wie in Fig. 1, jedoch unter Zwischenlage einer Stützscheibe 11. Diese Stützscheibe 11 ist ähnlich wie die Stützscheibe 9 aufgebaut, sie ist jedoch an ihrem unteren Rand radial nach innen gezogen, um das Gestrickekissen 6b stärker einzukammern. An der Oberseite ist das Geestrikkekissen 6b konisch nach innen gezogen und korrespondiert dort unter Zwischenlage einer gleichermaßen konisch nach innen gezogenen Stützscheibe 12 mit der kugelförmigen Ringfläche einer Mutter 13.

Auf diese Weise kann der Zuganker 5 Winkelbewegungen ausführen, ohne daß es zu einer ungleichmäßigen Verformung und Belastung des Gestrickeringes kommt.

Bei dem Ausführungsbeispiel nach Fig. 4 sind zwei Gestrickekissen an der Gelenkstelle vorgesehen, und zwar zu beiden Seiten des Flansches 2 je ein Kissen 6a. Beide Kissen sind wieder in Radialrichtung am Flansch 2 geführt, in diesem Fall durch ringförmige Vertiefungen, in die die Gestrikkekissen eingesetzt werden. An den Außenseiten werden die Gestrickekissen durch Stützringe 14 und 15 übergriffen, die ihrerseits durch Muttern 13 auf dem Zuganker 5 gegeneinander verspannt werden können.

Auf diese Weise können die Gestrickekissen je nach den zu erwartenden Einsatzbedingungen auf die erforderliche Lastaufnahme vorgespannt werden. Hinsichtlich der Ausbildung der Metalldrahtkissen ist es besonders günstig, wenn sie eine progressive Federkennlinie mit deutlicher Hysterese aufweisen. Dadurch können sie hohe Kräfte bei geringen Auslenkungen aufnehmen.

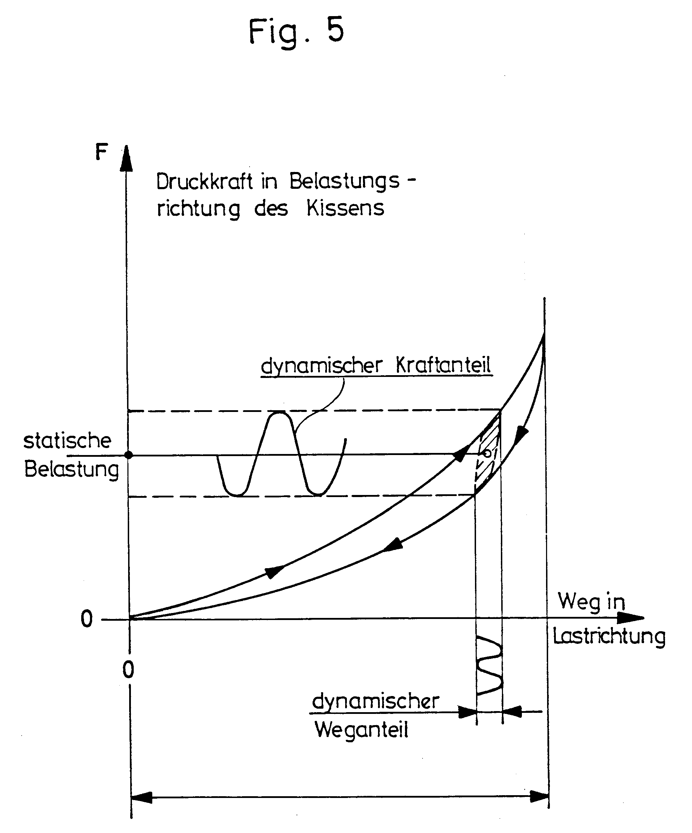

Zur Verdeutlichung sei auf Fig. 5 verwiesen. Sie zeigt den Kraft/Weg-Verlauf bei progressiver Federkennlinie mit Hysterese. Das zugrundegelegte Metalldrahtkissen ist hinsichtlich seiner Festigkeitseigenschaften und seiner Abmessungen so ausgelegt, daß die im Betrieb des Kompensators sich einstellende statische Belastung in der oberen Hälfte der Be- und Entlastungskurven liegt. Man erkennt deutlich, daß dann die dynamisch bedingten Kraftänderungen nur äußerst geringe Längenänderungen des Metalldrahtkissens hervorrufen. Der dynamische Weganteil ist um die Hälfte geringer als bei einer entsprechenden Federkennlinie ohne Hysterese. Man erkennt deutlich, daß allein aufgrund der Hysterese über 50 %, vorzugsweise über 70 % der dynamischen Belastungsänderung vom Metalldrahtkissen ohne merkliche Längenänderung aufgenommen wird.

Auf diese Weise ist es möglich, den Kompensator einerseits für eine totale schwingungstechnische Entkopplung zwischen den angeschlossenen Leitungssträngen heranzuziehen, ihn aber andererseits so hoch zu belasten, daß er der vor Inbetriebnahme vorgeschriebenen Druckprobe unterzogen werden kann, ohne daß zusätzlich Maßnahmen gegen ein Verschieben der angeschlossenen Leitungsteile getroffen werden müssen.

**Patentansprüche**

1.  Lateral- und/oder Angularkompensator aus Metall von Rohrleitungen für unter Druck stehende Medien, bestehend aus zumindest einem Balg (1) mit endständigen, radial vorstehenden Laschen (2, 3), die durch beidseits des Balges (1) verlaufende Zuganker (5) relativ zueinander beweglich verbunden sind, wobei die Zuganker (5) als einstückig durchgehende Metallstäbe ausgebildet sind, die mit ihren jeweils die Laschen (2, 3) durchquerenden Enden diesen gegenüber eine Gelenkstelle bilden, und wobei an wenigstens einer Gelenkstelle zwischen Zuganker (5) und Lasche (2, 3) ein Geräusch- und/oder schwingungsdämpfender Puffer (6, 6a, 6b) angeordnet ist,
dadurch gekennzeichnet,
daß der Puffer als ringförmiges Metalldrahtkissen (6, 6a, 6b) aus gepreßtem Metalldrahtgewebe, -geflecht, -gestricke oder -vlies ausgebildet ist, und daß der Balg (1) durch zumindest lokale Mehrlagigkeit gegen Körperschall isoliert ist.

2.  Kompensator nach Anspruch 1,
dadurch gekennzeichnet, daß das Metalldrahtkissen (6, 6a, 6b) radial unverschiebbar an der Lasche (2, 3) geführt ist.

3.  Kompensator nach Anspruch 2,
dadurch gekennzeichnet,
daß das Metalldrahtkissen (6, 6a, 6b) zwischen voneinander distanzierte Stützscheiben (9, 10; 11, 12) eingekammert ist.

4.  Kompensator nach Anspruch 2 oder 3,
dadurch gekennzeichnet,
daß das Metalldrahtkissen (6, 6b) und/oder zumindest eine seiner Stützscheiben (9, 11) einen axial vorstehenden Bund aufweisen, der in eine vom Zuganker mit Spiel durchquerte Öffnung (2a) der Lasche (2) hineinragt und darin geführt ist.

5.  Kompensator nach einem der Ansprüche 2 bis 4,
dadurch gekennzeichnet,
daß das Metalldrahtkissen (6b) und/oder zumindest eine seiner Stützscheiben (12) an der der Lasche (2) abgewandten Seite konisch oder konkav nach innen gezogen ist und mit einer entsprechend geformten Stirnfläche einer Querschnittserweiterung (13) am Zugankerende korrespondiert.

6. Kompensator nach einem der vorhergehenden Ansprüche,
dadurch gekennzeichnet,
daß paarweise angeordnete Kissen (6a) unabhängig von der Kompensatorstellung oder Druckbeanspruchung in Axialrichtung vorspannbar sind.

7. Kompensator nach einem der vorhergehenden Ansprüche,
dadurch gekennzeichnet,
daß die lokale Mehrlagigkeit des Balges durch ein Metallgewebe, -geflecht, -gestricke oder -vlies gegildet ist, das über zumindest einen Teil des Balges übergezogen ist.

8. Kompensator nach einem der Ansprüche 1 bis 6,
dadurch gekennzeichnet,
daß die lokale Mehrlagigkeit des Balges durch ein schraubengangförmig aufgewickeltes oder in Wellentäler eingelegtes Dämpfungsband gebildet ist.

9. Kompensator nach einem der Ansprüche 1 bis 6,
dadurch gekennzeichnet,
daß der Balg (1) durchgehend mehrwandig ist.

10. Kompensator nach einem der vorhergehenden Ansprüche,
dadurch gekennzeichnet,
daß die Metalldrahtkissen (6, 6a, 6b) eine progressive Federkennlinie, insbesondere mit deutlicher Hysterese, aufweisen.

11. Kompensator nach einem der vorhergehenden Ansprüche,
dadurch gekennzeichnet,
daß die Metalldrahtkissen (6, 6a, 6b) mechanisch von außen und/oder durch den in der Leitung herrschenden Betriebsdruck derart verspannt sind, daß die im Betrieb sich einstellende statische Belastung auf dem steilen Ast der Federkennlinie, insbesondere im oder oberhalb des 40° Grad-Bereiches der Kennliniensteigung liegt.

12. Kompensator nach einem der vorhergehenden Ansprüche,
dadurch gekennzeichnet,
daß die Metalldrahtkissen (6, 6a, 6b) bei der im Betrieb sich einstellenden statischen Belastung um 1 Millimeter bis 4 Millimeter zusammengedrückt sind.

## Claims

1. Lateral and/or angular compensator of metal for pipe conduits for media under pressure, consisting of at least one bellows element (1) with terminal, radially protruding shackles (2, 3) which are connected movably in relation to one another by tie bolts (5) extending on both sides of the bellows element (1), the tie bolts (5) being formed as metal rods extending through in one piece which, with their ends traversing the shackles (2, 3), form an articulation in relation to these, and a noise-damping and/or vibration-damping buffer (6, 6a, 6b) being arranged at one articulation at least between tie bolt (5) and shackle (2, 3), characterised in that the buffer is formed as an annular metal wire cushion (6, 6a, 6b) of pressed metal wire fabric, braided material, knitted fabric or fleece, and in that the bellows element (1) is isolated against solid-conducted noise by at least local multi-layer formation.

2. Compensator according to Claim 1, characterised in that the metal wire cushion (6, 6a, 6b) is radially nondisplaceably guided on the shackle (2, 3).

3. Compensator according to Claim, 2, characterised in that the metal wire cushion (6, 6a, 6b) is enclosed between mutually distanced support discs (9, 10; 11, 12).

4. Compensator according to Claim 2 or 3, characterised in that the metal wire cushion (6, 6b) and/or at least one of its support discs (9, 11) comprise an axially protruding collar which extends into an opening (2a) of the shackle (2) which is traversed with play by the tie bolt, and is guided therein.

5. Compensator according to one of Claims 2 to 4, characterised in that the metal wire cushion (6b) and/or at least one of its support discs (12) is drawn conically or concavely inwards on the side remote from the shackle (2) and corresponds with a correspondingly formed end face of a widening (13) of cross-section at the tie bolt end.

6. Compensator according to one of the preceding Claims, characterised in that cushions (6a) arranged by pairs are initially stressable in the axial direction, independently of the compensator position or pressure stressing.

7. Compensator according to one of the preceding Claims, characterised in that the local multi-layer formation of the bellows element is formed by a metal fabric, braided fabric, knitted fabric, or fleece, which is drawn over at least a part of the bellows element.

8. Compensator according to one of Claims 1 to 6, characterised in that the local multi-layer formation of the bellows element is formed by a damping band which is helically wound-on or laid into corrugation troughs.

9. Compensator according to one of Claims 1 to 6, characterised in that the bellows (1) is multi-walled throughout.

10. Compensator according to one of the preceding Claims characterised in that the metal wire cushions (6, 6a, 6b) possess a progressive spring characteristic curve, especially with distinct hysteresis.

11. Compensator according to one of the preceding Claims, characterised in that the metal wire cushions (6, 6a, 6b) are braced mechanically from the exterior and/or by the working pressure prevailing in the conduit, in such a way that the static loading establishing itself in operation lies on the steep branch of the spring characteristic curve, especially in or above the 40 degree region of the characteristic curve rise.

12. Compensator according to one of the preceding Claims, characterised in that the metal wire cushions (6, 6a, 6b) are compressed by 1 millimetre to 4 millimetres, at the static loading establishing itself in operation.

**Revendications**

1. Compensateur métallique latéral et/ou angulaire de conduites pour des milieux sous pression, constitué par au moins un soufflet (1) possédant des pattes terminales (2,3), qui font saillie radialement et sont raccordées, de manière à être mobiles l'une par rapport à l'autre, par des tirants (5) disposés des deux côtés du soufflet (1), et dans lequel les tirants (5) sont réalisés sous la forme de barres métalliques monobloc, qui forment, au moyen de leurs extrémités qui traversent respectivement les pattes (2,3), un point d'articulation par rapport à ces pattes, et dans lequel un tampon (6,6a,6b) amortissant les bruits et/ou les vibrations est disposé en au moins un point d'articulation entre un tirant (5) et une patte (2,3), caractérisé en ce que le tampon est réalisé sous la forme d'un coussin annulaire (6,6a,6b) formé d'un tissu, d'un treillis, d'un tricot ou d'une nappe pressée en fil métallique et que le soufflet (1) est isolé vis-à-vis du son transmis par le corps, par une structure multicouches prévue au moins localement.

2. Compensateur selon la revendication 1, caractérisé en ce que le coussin (6,6a,6b) formé d'un fil métallique est guidé de manière à être immobile radialement sur la patte (2,3).

3. Compensateur selon la revendication 2, caractérisé en ce que le coussin (6,6a,6b) formé d'un fil métallique est inséré entre des rondelles d'appui (9,10;11,12) maintenues distantes l'une de l'autre.

4. Compensateur selon les revendications 2 ou 3, caractérisé en ce que le coussin (6,6b) formé d'un fil métallique et/ou au moins l'une de ses rondelles d'appui (9,11) possèdent un collet qui fait saillie axialement, pénètre dans une ouverture (2a), traversée avec jeu par le tirant, de la patte (2) et y est guidé.

5. Compensateur selon l'une des revendications 2 à 4, caractérisé en ce que le coussin (6b) formé d'un fil métallique et/ou au moins l'une de ses rondelles d'appui (12) présente un renfoncement conique ou concave au niveau de la face tournée à l'opposé de la patte (2) et correspond, par une surface frontale conformée de façon correspondante, à un élargissement (13) de la section transversale présente sur l'extrémité du tirant.

6. Compensateur selon l'une des revendications précédentes, caractérisé en ce que des coussins (6a) prévus par couples peuvent être précontraints dans la direction axiale, indépendamment de la position du compensateur ou de la contrainte de pression.

7. Compensateur selon l'une des revendications précédentes, caractérisé en ce que la structure multicouches locale du soufflet est formée par un tissu, un treillis, un tricot ou une nappe métallique, qui recouvre au moins une partie du soufflet.

8. Compensateur selon l'une des revendications 1 à 6, caractérisé en ce que la structure multicouches locale du soufflet est formée par une bande d'amortissement enroulée selon une disposition hélicoïdale ou insérée dans des creux d'ondulations.

9. Compensateur selon l'une des revendications 1 à 6, caractérisé en ce que le soufflet (1) possède une paroi multiple sur toute son étendue.

10. Compensateur selon l'une des revendications précédentes, caractérisé en ce que les coussins (6,6a,6b) formés d'un fil métallique présentent une caractéristique d'élasticité progressive, possédant notamment une hystérésis nette.

11. Compensateur selon l'une des revendications précédentes, caractérisé en ce que les coussins (6a,6b) formés d'un fil métallique sont serrés mécaniquement à partir de l'extérieur et/ou par la pression de service régnant dans la conduite de sorte que la charge statique, qui s'établit en fonctionnement, est située sur la branche montante de la courbe caractéristique d'élasticité, notamment dans la partie correspondant à une pente de la courbe caractéristique égale ou supérieure à 40°.

12. Compensateur selon l'une des revendications précédentes, caractérisé en ce que les coussins (6,6a,6b) formés d'un fil métallique sont comprimés d'une valeur comprise entre 1 millimètre et 4 millimètres, dans le cas d'une charge statique s'établissant en fonctionnement.

# Fig. 1

Fig. 2

Fig. 3

Fig. 4

# Fig. 5

F — Druckkraft in Belastungs- richtung des Kissens

dynamischer Kraftanteil

statische Belastung

0

Weg in Lastrichtung

0

dynamischer Weganteil